# EUROPÄISCHE PATENTSCHRIFT

(11) **EP 3 287 219 B1**
(45) Veröffentlichungstag und Bekanntmachung des Hinweises auf die Patenterteilung: **14.08.2019**
(21) Anmeldenummer: 17191663.8
(22) Anmeldetag: 09.01.2012
(51) Int. Cl.: B23D 51/16, B25F 5/02

(54) **SÄBELSÄGE MIT EINER HIN- UND HERGEHENDEN ABTRIEBSSPINDEL**
RECIPROCATING SAW WITH AN OUTPUT SPINDLE THAT MOVES BACK AND FORTH
SCIE ALTERNATIVE POURVUE D'UNE BROCHE MENÉE DE VA-ET-VIENT

(30) Priorität: 09.02.2011 DE 102011010745
(43) Veröffentlichungstag der Anmeldung: 28.02.2018
(62) Teilanmeldung aus: 12700104.8
(73) Patentinhaber: Robert Bosch GmbH, 70442 Stuttgart (DE)
(72) Erfinder: Zador, Endre, IP38DH Ipswich, Suffolk (County) (HU); Koncsik, Tamas, 3793 Sajoecseg (HU); Kocsis, Timea, 3525 Miskolc (HU)

(56) Entgegenhaltungen:
- EP-A2- 1 738 851
- EP-A2- 1 844 646
- WO-A1-2008/003543
- GB-A- 2 234 034
- US-A1- 2003 192 191
- US-A1- 2004 016 134
- US-A1- 2004 231 170
- US-A1- 2009 183 887
- US-A1- 2009 223 071
- US-A1- 2009 223 071
- US-B1- 6 286 611
- US-B1- 6 449 851

## Beschreibung

Die Erfindung bezieht sich auf eine Säbelsäge, mit einer hin- und hergehenden Abtriebsspindel nach dem Oberbegriff des Anspruchs 1.

Bekannt sind motorisch angetriebene Säbelsägen oder Handsägen, beispielsweise elektromotorisch angetriebene Fuchsschwanzsägen, bei denen das Sägeblatt eine hin- und hergehende, oszillierende Arbeitsbewegung ausführt. Ein derartige Maschine, gemäß dem Oberbegriff des Anspruchs 1, ist beispielsweise offenbart in der US 2003/0192191 A1.

Ferner offenbaren die US 2009/0223071 A1 und US 2010/0162579 A1 Werkzeugmaschinen mit einer hin- und hergehenden Abtriebsspindel und einem Antriebsmotor, die über ein Getriebe miteinander gekoppelt sind. Die Längsachsen des Antriebsmotors und der Abtriebsspindel schließen dabei einen stumpfen Winkel ein. Der Antriebsmotor, die Abtriebsspindel und der Handgriff sind sternförmig angeordnet, wodurch die Werkzeugmaschine relativ viel Platz benötigt. Je nachdem kann der nach oben abstehende Antriebsmotor die Sicht auf das Schnittgut behindern.

Die US7818887 offenbart eine Werkzeugmaschine mit einer hin- und hergehenden Abtriebsspindel und einem Antriebsmotor, die über ein Getriebe miteinander gekoppelt sind, wobei die Abtriebsspindel einen Befestigungsabschnitt zum Befestigen eines Werkzeugs aufweist, wobei der Antriebsmotor einen mit dem Getriebe verbundenen Antriebsabschnitt und ein vom Getriebe entferntes, erstes Ende aufweist. Der Antriebsmotor ist in einem Handgriff der Werkzeugmaschine angeordnet. Die Werkzeugmaschine ist recht kompakt. Der Griff muss jedoch einen Mindestumfang haben, um den Antriebsmotor aufnehmen zu können.

Auch ist bspw. durch die Craftsman 14299 Nextec bekannt, dass der Griff und die Längsachse der Spindel fluchten. Der mit dem Getriebe verbundene Motor verläuft im rechten Winkel zu Griff und Längsachse der Spindel.

Die US 6449851 offenbart eine ähnliche Säbelsäge mit einem Griff, Motor, Getriebe und einer Spindel, wobei die Längsachsen des Motors und der Spindel im rechten Winkel zueinander angeordnet sind. Der Griff verläuft fast rechtwinklig zum Motor fluchtet aber nicht mit der Spindel.

Die US 5134777 offenbart einen Fuchsschwanz mit Griff, Motor, Getriebe und Spindel, wobei die Längsachsen des Motors und der Spindel im rechten Winkel zueinander angeordnet sind. Der Griff verläuft fast parallel zur Längsachse des Motors, ist jedoch leicht geneigt. Der Antriebsmotor ist in waagerechter Stellung des Fuchsschwanz nach oben gerichtet ist und kann gegebenenfalls die Sicht auf das Schnittgut behindern.

Aus der US 2004/237678 A1 ist ein ähnlicher Fuchsschwanz bekannt, wobei der Antriebsmotor in waagerechter Stellung des Fuchsschwanz nach unten gerichtet ist.

Durch die Black & Decker CompactSaw LPS7000 ist bekannt, dass die Längsachsen des Motors und der Spindel fluchten zueinander bzw. parallel zueinander verlaufen. Der Griff setzt pistolenartig am Motor an.

Durch die GB 2234034 und US 2006/0005402 A1 sind elektrische Messer bekannt, bei denen Batterie, Motor, Getriebe und Abtriebsspindel hintereinander angeordnet sind.

Durch die US 6286611 B1 und US 2004/143976 A1 sind weitere sogenannte Kompaktsägen bekannt, bei denen der Griff den Motor enthält, der seinerseits von der Abtriebsspindel weg gerichtet ist.

Daneben sind noch Säbelsägen bekannt mit einem Griff, einem Motor, einem Getriebe und einer Spindel, die alle hintereinander angeordnet sind, wobei die Längsachsen des Motors und der Spindel fluchten bzw. parallel zueinander verlaufen.

### Offenbarung der Erfindung

Der Erfindung liegt die Aufgabe zu Grunde, mit einfachen konstruktiven Maßnahmen eine kompakte Säbelsäge zu schaffen. Diese Aufgabe wird erfindungsgemäß mit den Merkmalen des Anspruches 1 gelöst. Die Unteransprüche geben zweckmäßige Weiterbildungen an.

Hierzu ist eine Säbelsäge mit einer hin- und hergehenden Abtriebsspindel und einem Antriebsmotor vorgesehen, die über ein Getriebe miteinander gekoppelt sind, wobei eine Längsseite der Abtriebsspindel und eine Längsseite des Antriebsmotors nebeneinander verlaufen, so dass der Antriebsmotor neben der Abtriebsspindel angeordnet ist.

Ein Vorteil der Säbelsäge ist, dass der Antriebsmotor in einem Bereich liegt, der die Sicht auf das Schnittgut nicht behindert.

Die erfindungsgemäße Säbelsäge ist gut ausbalanciert. Je nach Auslegung "zieht" der Antriebsmotor die Säge leicht in Richtung des Schnittguts.

Verbessert werden diese Effekte dadurch, dass die Abtriebsspindel einen Befestigungsabschnitt zum Befestigen eines Werkzeugs aufweist, dass der Antriebsmotor einen mit dem Getriebe verbundenen Antriebsabschnitt und ein vom Getriebe entferntes, erstes Ende aufweist und dass das vom Getriebe entfernte, erste Ende des Antriebsmotors näher beim Befestigungsabschnitt angeordnet ist als der mit dem Getriebe verbundene Antriebsabschnitt.

Dadurch, dass sich die Längsachse des Antriebsmotors und die Längsachse der Abtriebsspindel auf der vom Getriebe entfernten Seite unter einem Winkel α schneiden, so dass der Antriebsmotor und die Abtriebsspindel so geneigt sind, dass der Antriebsabschnitt weiter von der Abtriebsspindel entfernt ist als das erste Ende des Antriebsmotors, kann ein größerer Hub der Abtriebspindel erreicht werden.

Dadurch, dass der Winkel α zwischen 5° und 30°, insbesondere zwischen 15° und 20°, liegt und vorzugsweise 17° beträgt, ergibt sich eine besonders kompakte Bauform,

Vorzugsweise umfasst das Getriebe eine Taumelplattenbaugruppe, die auf einer Getriebewelle angeordnet ist, die parallel zur Längsachse des Antriebsmotors verläuft, was eine kostengünstige Ausbildung ermöglicht.

Dadurch, dass die Getriebewelle in einer vom Antriebsmotor und der Abtriebsspindel gebildeten Lücke liegt und vorzugsweise fliegend gelagert ist, wird der Bauraum besser genutzt.

Dadurch, dass die Taumelplattenbaugruppe einen ersten Abschnitt aufweist, der um die Getriebewelle angeordnet ist und einen zweiten Abschnitt, der in die Abtriebsspindel eingreift, und dass der erste und zweite Abschnitt, einen Winkel β einschließen, der 90° - α beträgt, kann der Hub der Abtriebsspindel vergrößert werden.

Eine besonders ergonomische Form ergibt sich dadurch, dass die Säbelsäge einen Handgriff aufweist, der mit der Abtriebsspindel einen stumpfen Winkel γ einschließt, der insbesondere zwischen 15° und 45° liegt, vorzugsweise °30 beträgt
Dadurch, dass der erste Winkel α und der stumpfe Winkel γ in einer Ebene und auf einer Seite der Abtriebsspindel angeordnet sind bzw. dadurch, dass der Antriebsmotor unterhalb der Abtriebsspindel angeordnet ist liegt die Säbelsäge besonders gut in der Hand.

Vorzugsweise ist Gehäuse für eine Säbelsäge vorgesehen mit einem Aufnahmebereich für eine Abtriebspindel, mit einem Griffabschnitt, mit einem Bauch zur Aufnahme eines Antriebsmotor, der unterhalb des Aufnahmebereichs für die Abtriebsspindel liegt, wobei der Aufnahmebereich und der Bauch eine senkrecht zur Abtriebspindel verlaufende, ovale Querschnittsfläche aufweisen, die den Antriebsmotor und die Abtriebsspindel zumindest teilweise umschließt.

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Darstellung einer elektromotorischen Säbelsäge, die als Werkzeug ein Sägeblatt aufweist, das eine lineare, oszillierende Sägebewegung ausübt, mit einer Stützeinrichtung zur Aufnahme eines zu bearbeitenden Objektes, wobei die Stützeinrichtung schwenkbar am Gehäuse der Werkzeugmaschine angeordnet ist,
- Fig. 2: die Säbelsäge einschließlich Stützeinrichtung in Seitenansicht,
- Fig. 3a: eine Seitenansicht der Säbelsäge mit einigen Komponenten, die in einer Gehäuseschale angeordnet sind,
- Fig. 3b: die Komponenten aus Fig. 3a ohne Gehäuseschale,
- Fig. 4: eine Explosionsdarstellung der Säbelsäge.

In den Figuren sind gleiche Bauteile mit gleichen Bezugszeichen versehen.

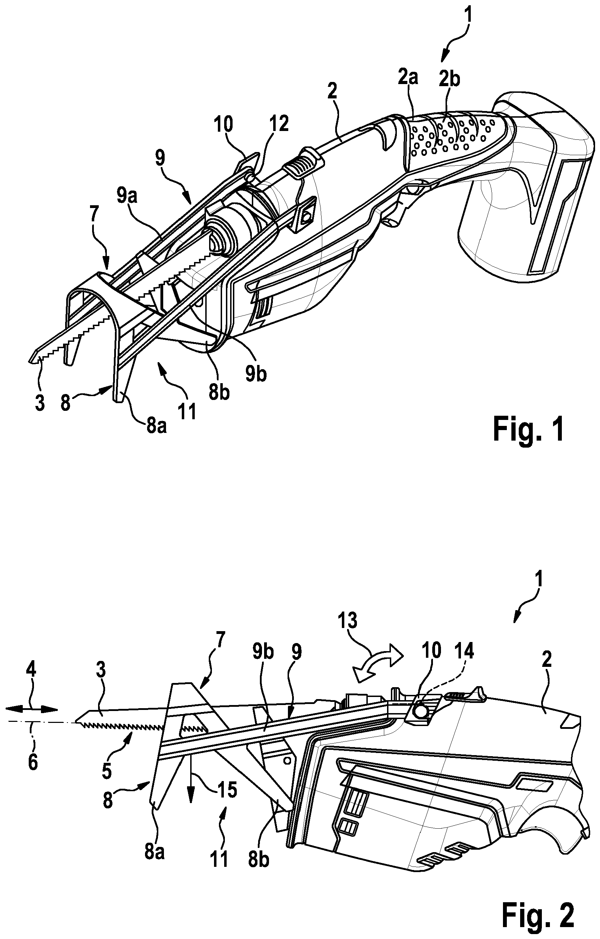

In den Figuren 1 und 2 ist eine als elektrische Säbelsäge 1 (auch Fuchsschwanzsäge oder "Reciprosäge" genannt) ausgeführte Werkzeugmaschine in Form einer Sägemaschine oder -vorrichtung für gerade, hin- und hergehende Sägeblätter gezeigt. Die Säbelsäge 1 ist als Handwerkzeugmaschine ausgeführt, die in einem aus zwei Gehäuseschalen 2a, 2b bestehenden Gehäuse 2 einen elektrischen Antriebsmotor zum Antreiben eines als Sägeblatt 3 ausgeführten Werkzeugs aufweist. Das Sägeblatt 3 übt, wie Fig. 2 zu entnehmen, eine oszillierende, lineare Arbeitsbewegung gemäß Doppelpfeil 4 aus, bei der die Sägezähne 5 des Sägeblatts 3, die in einer Sägezahnlinie 6 stehen, vor und zurück bewegt werden. Die Arbeitsbewegung 4 erfolgt entlang der Sägezahnlinie 6. Statt der linearen Hin- und Herbewegung kann das Sägeblatt auch eine orbitale Bewegung ausführen.

Wie den Figuren 1 und 2 weiter zu entnehmen, ist die Säbelsäge 1 mit einer Stützeinrichtung 7 versehen, die ein Stützelement 8 an einem Trägerteil 9 sowie ein Befestigungselement 10 am Gehäuse 2 umfasst. Das Stützelement 8 ist als Stützwinkel ausgebildet und weist zwei winklig zueinander angeordnete Stützschenkel 8a und 8b auf, die sich nach außen hin öffnen und einen Aufnahmebereich 11 zur Aufnahme eines zu bearbeitenden Gegenstandes bzw. Objekts begrenzen. Das Stützelement 8 ist, wie der perspektivischen Darstellung gemäß Fig. 1 zu entnehmen, U-förmig ausgebildet, wobei jeder U-Schenkel zwei Stützschenkel 8a, 8b mit einem zwischenliegenden Aufnahmebereich 11 aufweist.

Das Trägerteil 9 umfasst zwei Trägerschenkel 9a, 9b, die jeweils an verschiedenen Seiten des U-förmigen Stützelementes 8 geführt und mit dem Stützelement fest verbunden sind. Auf der dem Stützelement 8 gegenüberliegenden Seite sind die Enden der beiden Trägerschenkel 9a, 9b schwenkbar mit dem Befestigungselement 10 verbunden, das lösbar am Gehäuse 2 der Säbelsäge 1 angeordnet ist. Diese Ausführung ermöglicht es, die Stützeinrichtung 7 mit dem Stützelement 8 und dem Trägerteil 9 um die Achse 12 des Schwenkgelenks zwischen Befestigungselement 10 und den Trägerschenkeln 9a, 9b in Schwenkrichtung 13 (Fig. 2) zu verschwenken.

Wie Fig. 2 außerdem zu entnehmen, ist um die Achse 12 des Schwenkgelenks zwischen dem Befestigungselement 10 und den Trägerschenkeln 9a, 9b ein Federelement 14 in Form einer Schenkelfeder gelegt, die das Trägerteil 9 einschließlich Stützelement 8 in die in Fig. 2 dargestellte Ausgangsposition federbelastet. Das Federelement 14 generiert um die Achse 12 ein Moment, das in Höhe des Aufnahmebereichs 11 als ein Kraftpfeil 15 wirkt, welcher zumindest annähernd senkrecht zur Sägezahnlinie 6 des Sägeblatts 3 wirkt. Um das Stützelement 8 gegen die Kraft des Federelements 14 nach oben verschwenken zu können, muss eine Kraft entgegengesetzt zum Kraftpfeil 15 aufgewandt werden. Diese Kraft beträgt vorteilhafterweise weniger als 10 N, beispielsweise 4 N bis 9 N.

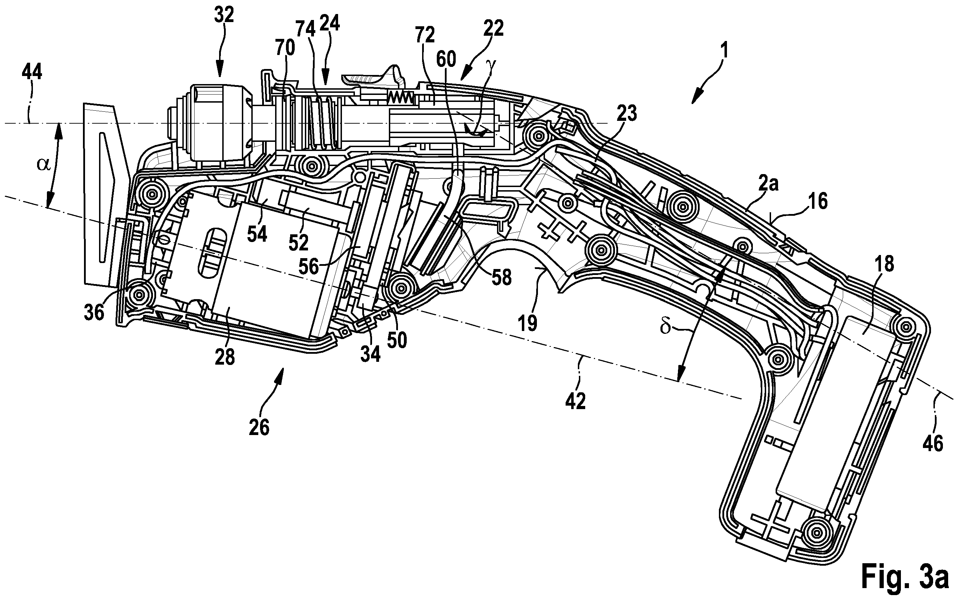

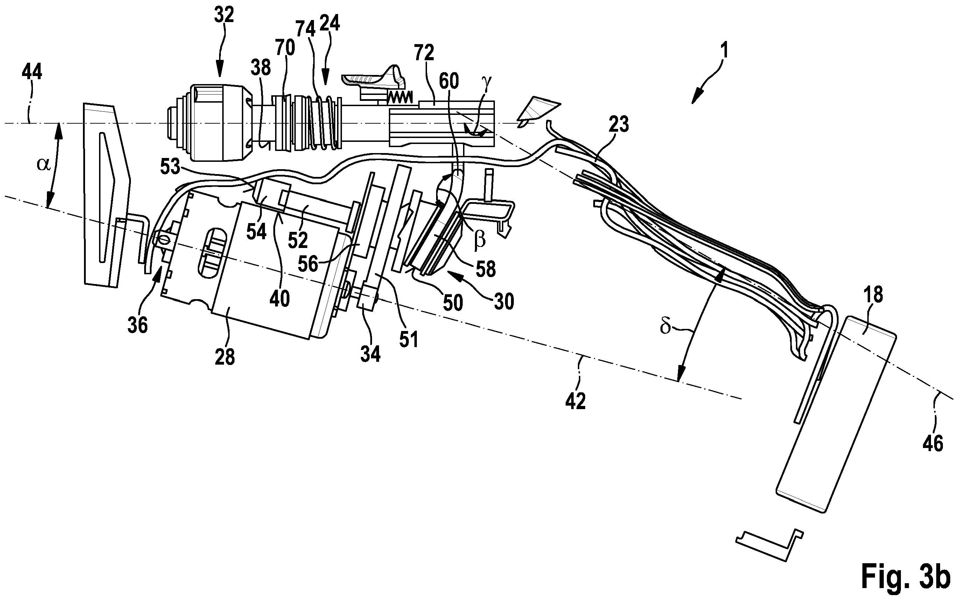

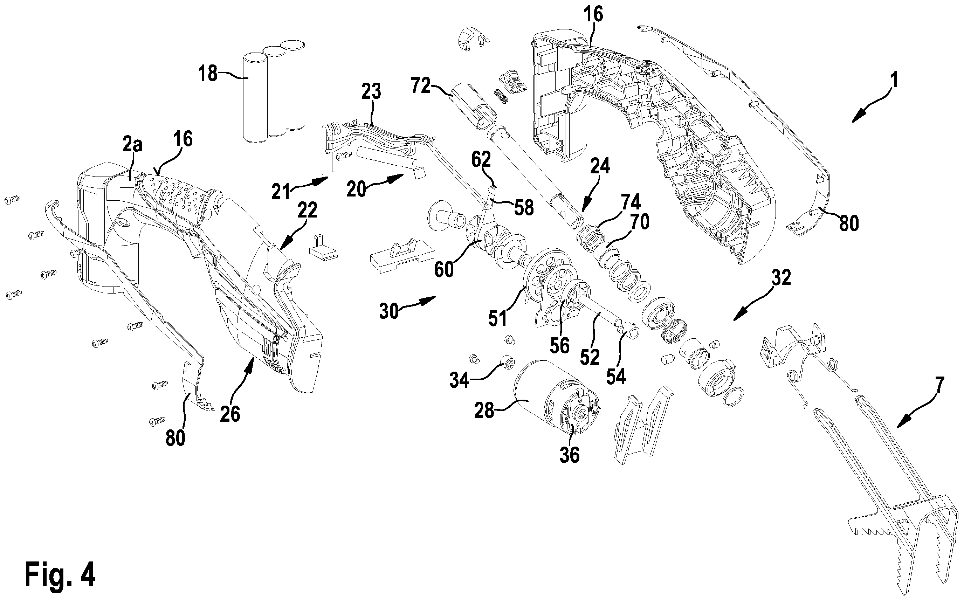

In den Fig. 3a, 3b und 4 sind im Gehäuse 2 angeordneten Komponenten und Baugruppen der Säbelsäge 1 gezeigt.

Das Gehäuse 2 umfasst einen Griffabschnitt 16 in dessen einen Ende ein wiederaufladbarer Akku 18 angeordnet ist, der aber auch auswechselbar ausgebildet sein kann. Alternativ kann hier aber auch ein Kabelanschluss für ein Netzkabel vorgesehen sein. Im Gehäuse 2 ist auch eine Ausnehmung 19 für einen Ein-/Ausschalter 20 vorgesehen. Über den Ein-/Ausschalter 20 wird eine Elektronikbaugruppe 21 betätigt, mit der die Säbelsäge 1 gesteuert wird.

Am vom Akku 18 abgewandten Ende weist das Gehäuse 2 einen Aufnahmebereich 22 für eine Abtriebsspindel 24 auf. Unter dem Aufnahmebereich 22 weist das Gehäuse 2 einen Bauch 26 zur Aufnahme eines Antriebsmotor 28 auf, der unterhalb des Aufnahmebereichs 22 für die Abtriebsspindel 24 liegt. Der Aufnahmebereich 22 und der Bauch 26 weisen eine senkrecht zur Abtriebspindel 24 verlaufende, ovale Querschnittsfläche auf, die die Abtriebsspindel 24 und den Antriebsmotor 28 umschließt. Der Akku 18, der Ein-/Ausschalter 20, die Elektronikbaugruppe 21 und der Antriebsmotor 28 sind über Kabel 23 in miteinander verkabelt.

Die als Säbelsäge 1 ausgebildete Werkzeugmaschine umfasst weiterhin eine hin- und hergehenden Abtriebsspindel 24, die über ein Getriebe 30 mit dem Antriebsmotor 28 gekoppelt ist. Am aus der Säbelsäge 1 herausragenden Ende der Abtriebsspindel 24 ist ein mehrteiliger Befestigungsabschnitt 32 zum Befestigen des Sägeblatts 3 vorgesehen.

Der Antriebsmotor 28 weist einen mit dem Getriebe 30 verbundenen Antriebsabschnitt in Form eines Ritzels 34 und ein vom Getriebe 30 entferntes, erstes Ende 36 auf.

Eine Längsseite 38 der Abtriebsspindel 24 und eine Längsseite 40 des Antriebsmotors 28 verlaufen nebeneinander, so dass der Antriebsmotor 28 neben der Abtriebsspindel 24 angeordnet ist. Das vom Getriebe 30 entfernte, erste Ende 36 des Antriebsmotors 28 ist näher beim Befestigungsabschnitt 32 angeordnet als das mit dem Getriebe verbundene Ritzel 34.

Die Längsachse 42 des Antriebsmotors 28 und die Längsachse 44 der Abtriebsspindel 24 schneiden sich auf der vom Getriebe 30 entfernten Seite und schließen einen Winkel α ein, so dass der Antriebsmotor 28 und die Abtriebsspindel so geneigt sind, dass das Ritzel 34 weiter von der Abtriebsspindel 24 entfernt ist als das erste Ende 36 des Antriebsmotors 28. Der Winkel α beträgt vorzugsweise 17° beträgt, wobei ein Bereich zwischen 15° und 20° auch gut ist und ein Bereich von 5° bis 30° auch ausreicht.

Entlang des Griffabschnitts 16 des Gehäuses 2 bzw. des Handgriffs verläuft eine Längsachse 46, die mit der Längsachse 44 Abtriebsspindel 24 einen stumpfen Winkel γ einschließt, der insbesondere zwischen 15° und 45° liegt, vorzugsweise 30° beträgt. Der erste Winkel α und der stumpfe Winkel γ liegen in einer Ebene und sind auf einer Seite der Spindel angeordnet. Dadurch ergibt sich auf, dass der Antriebsmotor, insbesondere bei waagerechter Anordnung der Säbelsäge, unterhalb der Spindel angeordnet ist.

Es schließen also der Antriebsmotor 28 und die Abtriebsspindel 24 bzw. deren Längsachsen 42 und 44 einen spitzen Winkel α ein. Außerdem schließen der Handgriff und die Abtriebsspindel 24 einen stumpfen Winkel ein γ. Ferner schließen der Handgriff und der Antriebsmotor 28 bzw. deren Längsachsen 42 und 46 einen spitzen Winkel δ ein. Dadurch ergibt sich eine sehr kompakte Anordnung der Baugruppen.

Das Getriebe 30 umfasst eine Taumelplattenbaugruppe 50, die auf einer Getriebewelle 52 angeordnet ist, die parallel zur Längsachse 42 des Antriebsmotors 28 verläuft. Die Getriebewelle 52 liegt in einer vom Antriebsmotor 28 und der Abtriebsspindel 24 gebildeten Lücke 53 und ist vorzugsweise fliegend gelagert ist. Zur Lagerung ist hierzu einerseits ein Gleitlager 54 vorgesehen, das im Bauch 26 zwischen dem Antriebsmotor 28 und der Abtriebsspindel 24 angeordnet ist. Andererseits ist ein Kugellager 56 vorgesehen, das ebenfalls im Bauch 26 angeordnet ist. Es versteht sich, dass alle wesentliche Komponenten durch komplementäre Ausnehmungen in den Gehäuseschalen 2a, 2b gehalten sind. Es ist aber auch denkbar, dass ein Kugellager an der vom Antriebsmotor 28 entfernten Seite der Taumelplattenbaugruppe 50 angeordnet ist.

Zum Antrieb der Taumelplattenbaugruppe 50 ist ein Zahnrad 51 vorgesehen, das drehfest auf der Getriebewelle 52 angeordnet ist und vom Ritzel 34 angetrieben wird.

Die Taumelplattenbaugruppe 50 weist einen ersten Abschnitt 58 auf, der um die Getriebewelle 52 angeordnet ist und einen zweiten Abschnitt 60, der in die Abtriebsspindel 24 eingreift. Der erste und zweite Abschnitt 58, 60 schließen einen Winkel β ein, der 90° - α beträgt.

Am Ende des zweiten Abschnitts 60 ist ein Kugelkopf 62 ausgebildet, der in eine Ausnehmung 64 in der Abtriebsspindel 35 greift. Durch diese Anordnung erreicht man trotz der kompakten Bauform einen recht großen Hub der Abtriebsspindel 24.

Die Abtriebsspindel 24 ist in einem vorderen, über dem Antriebsmotor 28 angeordneten Gleitlager 70 und einem am im Gehäuse 2 angeordneten Gleitlager 72 gelagert. Das vordere Gleitlager 70 ist über eine Feder 74 abgestützt.

Seitlich an den Gehäuseschalen 2a, 2b befinden sich noch Deckstreifen 80. Die Gehäuseschalen 2a, 2b werden über Schrauben 82 montiert.

Anstelle eines Getriebes mit Taumelplattenbaugruppe kann auch ein Winkelgetriebe vorgesehen sein, wobei die Taumelplattenbaugruppe günstiger herstellbar ist.

Neben eine Ausbildung als Säbelsäge ist es auch denkbar, dass der Abtriebsspindel neben der Hubbewegung eine Drehbewegung überlagert wird, so dass die Werkzeugmaschine als eine Schlagbohrmaschine ausgeführt ist.

## Patentansprüche

1. Säbelsäge, mit einer hin- und hergehenden Abtriebsspindel (24) und einem Antriebsmotor (28), die über ein Getriebe (30) miteinander gekoppelt sind, wobei eine Längsseite (38) der Abtriebsspindel (24) und eine Längsseite (40) des Antriebsmotors (28) nebeneinander verlaufen, so dass der Antriebsmotor (28) neben der Abtriebsspindel (24) angeordnet ist, wobei die Abtriebsspindel (24) einen Befestigungsabschnitt (32) zum Befestigen eines Werkzeugs (3) aufweist, dass der Antriebsmotor (28) einen mit dem Getriebe (30) verbundenen Antriebsabschnitt (34) und ein vom Getriebe (30) entferntes, erstes Ende (36) aufweist und dass das vom Getriebe (30) entfernte, erste Ende (36) des Antriebsmotors (28) näher beim Befestigungsabschnitt (32) angeordnet ist als der mit dem Getriebe (30) verbundene Antriebsabschnitt (34), **dadurch gekennzeichnet, dass** das Getriebe (30) eine Taumelplattenbaugruppe (50) umfasst, die auf einer Getriebewelle (52) angeordnet ist, die parallel zur Längsachse (42) des Antriebsmotors (28) verläuft.

2. Säbelsäge nach Anspruch 1, **dadurch gekennzeichnet, dass** die Säbelsäge einen Handgriff (16) aufweist, der mit der Abtriebsspindel (24) einen stumpfen Winkel (γ) einschließt.

3. Säbelsäge nach Anspruch 1 oder 2, **dadurch gekennzeichnet, dass** sich die Längsachse (42) des Antriebsmotors (28) und die Längsachse (44) der Abtriebsspindel (24) auf der vom Getriebe (30) entfernten Seite unter einem Winkel (α) schneiden, so dass der Antriebsmotor (28) und die Abtriebsspindel (24) so geneigt sind, dass der Antriebsabschnitt (34) weiter von der Abtriebsspindel (24) entfernt ist als das erste Ende (26) des Antriebsmotors (28).

4. Säbelsäge nach Anspruch 3, **dadurch gekennzeichnet, dass** der Winkel (α) zwischen 5° und 30°, insbesondere zwischen 15° und 20°, liegt und vorzugsweise 17° beträgt.

5. Säbelsäge nach einem der vorhergehenden Ansprüche, **dadurch gekennzeichnet, dass** die Getriebewelle (52) in einer vom Antriebsmotor (28) und der Abtriebsspindel (24) gebildeten Lücke (53) liegt und vorzugsweise fliegend gelagert ist.

6. Säbelsäge nach einem der vorhergehenden Ansprüche, **dadurch gekennzeichnet, dass** die Taumelplattenbaugruppe (50) einen ersten Abschnitt (58) aufweist, der um die Getriebewelle (52) angeordnet ist und einen zweiten Abschnitt (60), der in die Abtriebsspindel (24) eingreift, und dass der erste und zweite Abschnitt (58, 60) einen Winkel (β) einschließen, der 90° - α beträgt.

7. Säbelsäge nach einem der vorhergehenden Ansprüche, **dadurch gekennzeichnet, dass** der stumpfen Winkel (γ) zwischen 135° und 165° liegt, vorzugsweise 150° beträgt.

8. Säbelsäge nach Anspruch 6, **dadurch gekennzeichnet, dass** der erste Winkel (α) und der stumpfe Winkel (γ) in einer Ebene und auf einer Seite der Abtriebsspindel (24) angeordnet sind, so dass der Antriebsmotor (28) unterhalb der Abtriebsspindel (24) angeordnet ist.

9. Säbelsäge nach einem der vorhergehenden Ansprüche mit einem Gehäuse (2), das einen Aufnahmebereich (22) für eine Abtriebspindel (24) aufweist, ferner mit einem Griffabschnitt (15), mit einem Bauch (26) zur Aufnahme eines Antriebsmotor (28), der unterhalb des Aufnahmebereichs (22) für die Abtriebsspindel (24) liegt, wobei der Aufnahmebereich (22) und der Bauch (26) eine senkrecht zur Abtriebspindel (24) verlaufende, ovale Querschnittsfläche aufweisen, die den Antriebsmotor (28) und die Abtriebsspindel (24) zumindest teilweise umschließt.

10. Säbelsäge nach Anspruch 9, **dadurch gekennzeichnet, dass** das Gehäuse (2) einen Griffabschnitt 16 umfasst, in dessen einen Ende ein wiederaufladbarer oder ein auswechselbarer Akku (18) angeordnet ist.

11. Säbelsäge nach Anspruch 5, **dadurch gekennzeichnet, dass** zur Lagerung der Getriebewelle (52) einerseits ein Gleitlager (54) vorgesehen ist, das im Bauch (26) zwischen dem Antriebsmotor (28) und der Abtriebsspindel (24) angeordnet ist und andererseits ein Kugellager (56), das ebenfalls im Bauch (26) angeordnet ist.

12. Säbelsäge nach einem der vorhergehenden Ansprüche, **dadurch gekennzeichnet, dass** die Taumelplattenbaugruppe (50) einen ersten Abschnitt (58) aufweist, der um die Getriebewelle (52) angeordnet ist und einen zweiten Abschnitt (60), der in die Abtriebsspindel (24) eingreift.

13. Säbelsäge nach Anspruch 12, **dadurch gekennzeichnet, dass** am Ende des zweiten Abschnitts (60) ein Kugelkopf (62) ausgebildet ist, der in eine Ausnehmung (64) in der Abtriebsspindel (35) greift.

14. Säbelsäge nach einem der vorhergehenden Ansprüche, **dadurch gekennzeichnet, dass** die Abtriebsspindel (24) in einem vorderen, über dem Antriebsmotor (28) angeordneten Gleitlager (70) und einem am im Gehäuse (2) angeordneten Gleitlager (72) gelagert ist, wobei insbesondere das vordere Gleitlager (70) über eine Feder (74) abgestützt ist.

15. Säbelsäge nach einem der vorhergehenden Ansprüche, **dadurch gekennzeichnet, dass** der Antriebsmotor (28), insbesondere bei waagerechter Anordnung der Säbelsäge, unterhalb der Abtriebsspindel (24) angeordnet ist.

## Claims

1. Reciprocating saw having an output spindle (24) that moves back and forth and a drive motor (28), which are coupled to each other via a gear mechanism (30), a long side (38) of the output spindle (24) and a long side (40) of the drive motor (28) extending beside each other, so that the drive motor (28) is arranged beside the output spindle (24), the output spindle (24) having a fixing section (32) for fixing a tool (3), that the drive motor (28) has a drive section (34) connected to the gear mechanism (30) and a first end (36) remote from the gear mechanism (30), and that the first end (36) of the drive motor (28) that is remote from the gear mechanism (30) is arranged closer to the fixing section (32) than the drive section (34) connected to the gear mechanism (30), **characterized in that** the gear mechanism (30) comprises a swash-plate assembly (50), which is arranged on a gear mechanism shaft (52) which extends parallel to the longitudinal axis (42) of the drive motor (28).

2. Reciprocating saw according to Claim 1, **characterized in that** the reciprocating saw has a handle (16), which encloses an obtuse angle (γ) with the output spindle (24).

3. Reciprocating saw according to Claim 1 or 2, **characterized in that** the longitudinal axis (42) of the drive motor (28) and the longitudinal axis (44) of the output spindle (24) intersect at an angle (α) on the side remote from the gear mechanism (30), so that the drive motor (28) and the output spindle (24) are inclined such that the drive section (34) is more remote from the output spindle (24) than the first end (26) of the drive motor (28).

4. Reciprocating saw according to Claim 3, **characterized in that** the angle (α) lies between 5° and 30°, in particular between 15° and 20°, and is preferably 17°.

5. Reciprocating saw according to one of the preceding claims, **characterized in that** the gear mechanism shaft (52) is located in a gap (53) formed by the drive motor (28) and the output spindle (24) and is preferably cantilever-mounted.

6. Reciprocating saw according to one of the preceding claims, **characterized in that** the swash-plate assembly (50) has a first section (58), which is arranged around the gear mechanism shaft (52), and a second section (60) which engages in the output spindle (24), and **in that** the first and second section (58, 60) enclose an angle (β) which is 90° - α.

7. Reciprocating saw according to one of the preceding claims, **characterized in that** the obtuse angle (γ) lies between 135° and 165°, is preferably 150°.

8. Reciprocating saw according to Claim 6, **characterized in that** the first angle (α) and the obtuse angle (γ) are arranged in one plane and on one side of the output spindle (24), so that the drive motor (28) is arranged underneath the output spindle (24).

9. Reciprocating saw according to one of the preceding claims, having a housing (2), which has a receiving region (22) for an output spindle (24), also having a handle section (15), having a belly (26) for receiving a drive motor (28), which is located underneath the receiving region (22) for the output spindle (24), wherein the receiving region (22) and the belly (26) have an oval cross-sectional area which extends at right angles to the output spindle (24) and which at least partly encloses the drive motor (28) and the output spindle (24).

10. Reciprocating saw according to Claim 9, **characterized in that** the housing (2) comprises a handle section (16) in one end of which there is arranged a rechargeable or a replaceable battery (18).

11. Reciprocating saw according to Claim 5, **characterized in that** in order to mount the gear mechanism shaft (52), on one side a sliding bearing (54) is provided, which is arranged in the belly (26) between the drive motor (28) and the output spindle (24) and, on the other side, a spherical bearing (56), which is likewise arranged in the belly (26).

12. Reciprocating saw according to one of the preceding claims, **characterized in that** the swash-plate assembly (50) has a first section (58), which is arranged around the gear mechanism shaft (52), and a second section (60) which engages in the output spindle (24).

13. Reciprocating saw according to Claim 12, **characterized in that** at the end of the second section (60) there is formed a spherical head (62), which engages in a recess (64) in the output spindle (35).

14. Reciprocating saw according to one of the preceding claims, **characterized in that** the output spindle (24) is mounted in a front sliding bearing (70) arranged above the drive motor (28) and in a sliding bearing (72) arranged on the in the housing (2), wherein in particular the front sliding bearing (70) is supported via a spring (74) .

15. Reciprocating saw according to one of the preceding claims, **characterized in that** the drive motor (28) is arranged underneath the output spindle (24), in particular in a horizontal arrangement of the reciprocating saw.

## Revendications

1. Scie alternative, pourvue d'une broche menée de va-et-vient (24) et d'un moteur d'entraînement (28), qui sont couplés l'un à l'autre par une transmission (30), dans laquelle un côté longitudinal (38) de la broche menée (24) et un côté longitudinal (40) du moteur d'entraînement (28) s'étendent l'un à côté de l'autre, de telle manière que le moteur d'entraînement (28) soit disposé à côté de la broche menée (24), dans laquelle la broche menée (24) présente une partie de fixation (32) pour la fixation d'un outil (3), que le moteur d'entraînement (28) présente une partie d'entraînement (34) reliée à la transmission (30) et une première extrémité (36) éloignée de la transmission (30), et que la première extrémité (36) du moteur d'entraînement (28) éloignée de la transmission (30) soit située plus près de la partie de fixation (32) que la partie d'entraînement (34) reliée à la transmission (30), **caractérisée en ce que** la transmission (30) comprend un groupe de construction à plaque oscillante (50), qui est disposé sur un arbre de transmission (52), qui est parallèle à l'axe longitudinal (42) du moteur d'entraînement (28).

2. Scie alternative selon la revendication 1, **caractérisée en ce que** la scie alternative présente une poignée (16), qui forme un angle obtus (γ) avec la broche menée (24).

3. Scie alternative selon une revendication 1 ou 2, **caractérisée en ce que** l'axe longitudinal (42) du moteur d'entraînement (28) et l'axe longitudinal (44) de la broche menée (24) se coupent sur le côté éloigné de la transmission (30) sous un angle (α), de telle manière que le moteur d'entraînement (28) et la broche menée (24) soient inclinés de telle manière que la partie d'entraînement (34) soit plus éloignée de la broche menée (24) que la première extrémité (26) du moteur d'entraînement (28).

4. Scie alternative selon la revendication 3, **caractérisée en ce que** l'angle (α) se situe entre 5° et 30°, en particulier entre 15° et 20° et vaut de préférence 17°.

5. Scie alternative selon l'une quelconque des revendications précédentes, **caractérisée en ce que** l'arbre de transmission (52) est situé dans un intervalle (53) formé par le moteur d'entraînement (28) et la broche menée (24) et est de préférence flottant.

6. Scie alternative selon l'une quelconque des revendications précédentes, **caractérisée en ce que** le groupe de construction à plaque oscillante (50) présente une première partie (58), qui est disposée autour de l'arbre de transmission (52) et une seconde partie (60), qui s'engage dans la broche menée (24), et **en ce que** la première partie et la seconde partie (58, 60) forment un angle (β), qui vaut 90°- α.

7. Scie alternative selon l'une quelconque des revendications précédentes, **caractérisée en ce que** l'angle obtus (γ) se situe entre 135° et 165°, et vaut de préférence 150°.

8. Scie alternative selon la revendication 6, **caractérisée en ce que** le premier angle (α) et l'angle obtus (γ) sont disposés dans un plan et sur un côté de la broche menée (24), de telle manière que le moteur d'entraînement (28) soit disposé en dessous de la broche menée (24).

9. Scie alternative selon l'une quelconque des revendications précédentes avec un boîtier (2), qui présente une zone de logement (22) pour une broche menée (24), en outre avec une partie de poignée (15), avec un renflement (26) pour le logement d'un moteur d'entraînement (28), qui est situé en dessous de la zone de logement (22) pour la broche menée (24), dans laquelle la zone de logement (22) et le renflement (26) présentent une aire de section transversale ovale, s'étendant perpendiculairement à la broche menée (24), qui entoure au moins partiellement le moteur d'entraînement (28) et la broche menée (24).

10. Scie alternative selon la revendication 9, **caractérisée en ce que** le boîtier (2) comprend une partie de poignée (16), dans une extrémité de laquelle est disposé un accu rechargeable ou remplaçable (18).

11. Scie alternative selon la revendication 5, **caractérisée en ce qu'**il est prévu, pour le support de l'arbre de transmission (52), d'une part un palier lisse (54), qui est disposé dans le renflement (26) entre le moteur d'entraînement (28) et la broche menée (24), et d'autre part un roulement à billes (56), qui est également disposé dans le renflement (26).

12. Scie alternative selon l'une quelconque des revendications précédentes, **caractérisée en ce que** le groupe de construction à plaque oscillante (50) présente une première partie (58), qui est disposée autour de l'arbre de transmission (52) et une seconde partie (60), qui s'engage dans la broche menée (24).

13. Scie alternative selon la revendication 12, **caractérisée en ce qu'**une tête sphérique (62) est formée à l'extrémité de la seconde partie (60), et s'engage dans un évidement (64) dans la broche menée (35).

14. Scie alternative selon l'une quelconque des revendications précédentes, **caractérisée en ce que** la broche menée (24) est supportée dans un palier lisse avant (70) disposé au-dessus du moteur d'entraînement (28) et un palier lisse (72) disposé dans le boîtier (2), dans laquelle en particulier le palier lisse avant (70) est appuyé par un ressort (74).

15. Scie alternative selon l'une quelconque des revendications précédentes, **caractérisée en ce que** le moteur d'entraînement (28) est disposé en dessous de la broche menée (24), en particulier lorsque la scie alternative est disposée à l'horizontale.
